# EUROPEAN PATENT SPECIFICATION

(11) **EP 0 498 426 B1**
(45) Date of publication and mention of the grant of the patent: **15.01.1997**
(21) Application number: 92101997.2
(22) Date of filing: 06.02.1992
(51) Int. Cl.: C08F 8/08, C08G 81/02, C08F 297/04, C09J 153/02

(54) **Hydrogenated block copolymers containing epoxy groups**
Epoxidgruppenhaltige hydrierte Blockcopolymere
Copolymères séquencés hydrogénés contenant des groupes époxydes

(30) Priority: 06.02.1991 IT MI910306
(43) Date of publication of application: 12.08.1992
(73) Proprietor: ENICHEM ELASTOMERI S.r.l., I-20124 Milan (IT)
(72) Inventor: Custro, Sergio, Dr., I-48100 Ravenna (IT); Viola, Gian Tommaso, Dr., I-48015 Cervia, Ravenna (IT)
(74) Representative: Weinhold, Peter, Dr.

(56) References cited:
- EP-A- 0 268 981
- EP-A- 0 398 758
- GB-A- 2 061 961
- GB-A- 2 207 679
- GB-A- 2 225 330
- US-A- 3 699 184
- US-A- 4 051 199

## Description

The present invention relates to hydrogenated block copolymers, modified by the insertion of epoxy groups into the molecular chain, and to their preparation.

The anionic polymerization of diene and vinylaromatic monomers in the presence of metal alkyl or metal aryl catalysts to obtain "living polymers" is already well-known.

This preparation is described, e.g., by M. Szwarc in "Carbanions: Living Polymers and Electron Transfer Processes", Interscience Publishers, J. Wiley and Sons, N.Y. 1956.

In particular, with the known procedures it is possible to prepare both linear and branched block copolymers, especially block copolymers having polystyrene and polybutadiene blocks, such as those described in US-A-3078254, 3244644, 3265765, 3280084, 3594452, 3766301 and 3937760.

Again with the known procedure, it is possible to prepare multi-block polymers such as those of general formulae (B₁TAB₂)ₙX and B₁TA₁B₂A₂, described in IT-A-21563 A/87 and 21042 A/90, wherein B₁ and B₂ are polydiene and, preferably, polybutadiene blocks, the weight ratio of blocks B₂ to blocks B₁ ranging from 0.1:1 to 0.3:1, A, A₁ and A₂ are polyvinylaromatic and, preferably, polystyrene blocks and T is a tapered copolymeric segment composed of diene and vinylaromatic monomer units, whereas X is a coupling radical having a valence equal to n.

The block copolymer, whose concentration usually ranges from 0 to 20% of the total copolymer, comes from the coupling of growing chains with coupling agents such as dicarboxylic acids, halogen derivatives of silanes, chloro derivatives of silicon and tin.

The above polymers are used in different technical fields, depending on their specific composition and structure.

For example, copolymers of the above general formulae with a low content of vinylaromatic monomer units are suitable, in admixture with oils and resins, for the preparation of adhesive compositions and show good adhesion and cohesion, whereas polymers of the same general formulae but with a high content of vinylaromatic monomer units are suitable for use as modifiers of plastic materials.

The hydrogenation of the diene-derived units of the above copolymers, especially those containing 1,2-polybutadiene units in quantities of from 25 to 50% by weight, can be carried out by known methods, as described, e.g., in US-A-3431323, and affords materials (SEBS = poly(styrene-ethylene-butene-styrene)) having improved thermostability, which are particularly suitable when higher working temperatures are required, such as for the modification of engineering polymers, to which these saturated elastomers confer a better impact strength, or where excellent resistance is required under critical operating conditions, such as in the field of adhesives and sealants.

The absence of polar groups in the polymeric chain of these elastomers and, more generally, of all hydrogenated block copolymers of the SEBS kind (i.e., of those having styrene-ethylene-butene-styrene sequences) has a negative effect on their range of application when it is important to have compatibility both with polar substrates (e.g. glass and metal) in the field of adhesives and sealants, and for the modification of plastic materials (polyesters, polyamides, polyphenylene oxides etc.).

For this purpose, post-modifying techniques of block copolymers have been studied which allow the insertion of polar groups into a saturated polymeric structure by means of grafting techniques.

In general the art describes the functionalization of these polymeric substrates by the reaction of radicals, generated by thermal decomposition of peroxides, with reactive protons (secondary and tertiary carbons) present in the main polymeric chain and the subsequent reaction of the macroradicals thus formed with olefinic monomers having polar functionalities.

Among the olefinic monomers having polar functionalities and used in the above functionalization, glycidyl methacrylate may be mentioned. EP-A-268981 discloses the grafting reaction of polyglycidyl methacrylate units onto polymeric chains, resulting in polymers in which the epoxy groups are situated in side chains of the polymer. This makes them particularly susceptible to ring opening reactions, with the consequent possible gelation of the entire reaction mixture during the grafting phase. Other drawbacks connected with the insertion of glycidyl groups in the side chains of the block copolymer are the incomplete conversion of the above monomers and/or the formation of non-grafted homopolymers.

One object of the present invention is to overcome the above drawbacks.

It has now been found that the insertion of epoxy groups in the polymeric chain through the action of peracids on the partially hydrogenated unsaturations, both of the 1,4-cis and 1,4-trans type (i.e. double bonds formed by 1,4-polymerization of a 1,3-diene) originally present in the polydiene blocks, affords a further and unexpected improvement in the compatibility of the block copolymers with polar materials, whereas the mechanical properties and thermo-oxidation stability thereof remain unchanged.

The high stability of the epoxides having the above configuration allows to produce saturated polymers with an epoxy group content of as much as 20% of the diene-derived double bonds present in the block copolymer before its hydrogenation, without problems caused by the formation of gels due to the hydrolysis of the oxirane ring, referred to above as one of the drawbacks of the prior art.

Accordingly, the present invention provides linear or branched block copolymers having partially hydrogenated polydiene blocks (80 to 99% of the initially present double bonds are hydrogenated) which are completely epoxidized, represented by general formula (I):

[A-(E-B-EPOX)]ₙX (I)

wherein A represents a polyvinylaromatic block, preferably a polystyrene block, (E-B-EPOX) is a hydrogenated poly(1,3-diene) block, preferably an ethylene-butene copolymer block, containing 1,4 cis and/or 1,4-trans epoxy units (i.e. epoxy units derived from the epoxidation of double bonds formed by the 1,4-polymerization of the 1,3-diene) distributed along the polymeric chain, n is an integer of from 1 to 20 and X is a coupling radical of valence n;
said copolymers having a weight average molecular weight of from 30,000 to 400,000 (preferably from 30,000 to 200,000), a polyvinylaromatic block content of from 10 to 50% by weight and a content of EPOX units ranging from 1 to 20% of the unsaturations initially present in the polymer before its partial hydrogenation.

The present invention also provides linear or branched block copolymers wherein the polydiene blocks have been partially hydrogenated and then completely epoxidized and which can be represented by general formula (II) :

[(E₁-B₁-EPOX₁)-HT A-(E₂-B₂-EPOX₂)]ₙX (II)

wherein
A represents a polyvinylaromatic block accounting for from 10 to 50% by weight of the total copolymer;
HT is a tapered copolymeric segment composed of vinylaromatic and diene units and is present in amounts-of from zero to 20% by weight, the unsaturations of said tapered copolymeric segment having been partially hydrogenated and subsequently fully epoxidized; X and n have the meanings given above; (E₁-B₁-EPOX₁) and (E₂-B₂-EPOX₂) represent hydrogenated poly(1,3-diene) blocks, preferably ethylene-butene copolymer blocks, containing 1,4-cis and/or 1,4-trans epoxy units deriving from the epoxidation of from 1 to 20% of the unsaturations initially present in the polymer before hydrogenation and together accounting for from 50 to 90% by weight of the total copolymer;
the weight ratio of blocks (E₁-B₁-EPOX₁) to blocks (E₂-B₂-EPOX₂) ranging from 0.1:1 to 1.0:1 and the (weight) average molecular weight of the block copolymers of formula (II) ranging from 30,000 to 400,000, preferably from 30,000 to 200,000.

The present invention also provides linear block copolymers deriving from the block copolymerization of vinylaromatic and diene monomers, wherein the polydiene blocks have been partially hydrogenated and then fully epoxidized and which can be represented by general formula (III):

A₁-(E₁-B₁-EPOX₁)-A₂-HT-(E₂-B₂-EPOX₂) (III)

wherein
A₁ and A₂ represent polyvinylaromatic blocks;
HT is a tapered copolymeric segment composed of vinylaromatic and diene units which accounts for from 0 to 20% by weight of the total polymer, the unsaturations of said copolymeric segment having been partially hydrogenated and subsequently fully epoxidized; (E₁-B₁-EPOX₁) and (E₂-B₂-EPOX₂) represent hydrogenated poly(1,3-diene) blocks, preferably ethylene-butene copolymer blocks, containing 1,4-cis and/or 1,4-trans epoxy units deriving from the epoxidation of 1 to 20% of the unsaturations initially present in the polymer before the partial hydrogenation;
the weight ratio of blocks (E₁-B₁-EPOX₁) to blocks (E₂-B₂-EPOX₂) ranging from 0.1:1 to 1.0:1 and the (weight) average molecular weight of the block copolymers of formula (III) ranging from 30,000 to 400,000, preferably from 30,000 to 200,000.

More specifically, the present invention provides linear, branched or radial block copolymers corresponding to the above-mentioned general formulae (I), (II) and (III), showing a weight ratio of vinylaromatic units to diene units of from 10/90 to 50/50 and preferably of from 15/85 to 45/55, and having an average molecular weight of from 30,000 to 400,000, obtainable by means of a process the main steps of which are:
(1) Synthesis of the precursor copolymer of the block copolymer of formula (I), (II) or (III).
(2) Partial hydrogenation of said copolymer.
(3) Exhaustive epoxidation of the unsaturations still present.

The synthesis conditions of step (1) are those which are already known in the art.

The preparation of block copolymers similar to the present precursor copolymers (before partial hydrogenation and epoxidation) is disclosed, e.g., in IT-A-21563 A/87 and 21042 A/90 filed by the same applicant.

Particularly, the precursors of the block copolymers of general formula (I) may be synthesized as follows:
(a) Vinylaromatic monomer is polymerized to total or almost total conversion by means of the living polymer technique.
(b) Diene monomer is added to the product of step (a) and the resulting mixture is polymerized to total or almost total conversion of the diene monomer.
(c) The living chains obtained in step (b) are coupled by means of a polyfunctional coupling agent.
(d) The block copolymer resulting from the coupling reaction is recovered.

The precursors of the block copolymers corresponding to general formula (II) may be prepared as follows:
(a) A mixture of diene and vinylaromatic monomers is polymerized, by means of the living polymer technique, to total or almost total conversion of the monomers.
   In this step, as the monomers react in accordance with their reactivity, a polydiene block is first formed, which will grow until the amount of diene becomes so small and is dispersed in the mass of vinylaromatic monomer as to form a tapered copolymer linked to the above polydiene block. When all of the diene has reacted, the remaining vinylaromatic monomer polymerizes, thereby producing a polyvinylaromatic block. Consequently, if butadiene and styrene are used, this step results in a living polymer with three blocks, i.e., polybutadiene-T-A, where T is a tapered butadiene-styrene copolymer block and A is a polystyrene block.
(b) Diene monomer is added to the product of step (a) and the resulting mixture is polymerized to total or almost total conversion of the diene monomer fed.
(c) The living polymeric chains obtained in step (b) are coupled by means of a polyfunctional coupling agent.
(d) The branched block copolymer resulting from the coupling reaction of step (c) is recovered.

The following procedure may be adopted for the synthesis of the precursor copolymer of the branched block copolymer of formula (II) without the copolymeric segment HT (i.e., the percentage of block HT, in the final hydrogenated and epoxidized copolymer, is equal to 0):
(a) Diene monomer is polymerized, by means of the living polymer technique, to total or almost total conversion of said monomer.
(b) Vinylaromatic monomer is added to the product of step (a) and the resulting mixture is polymerized to total or almost total conversion of the vinylaromatic monomer fed.
(c) Diene monomer is added to the product of step (b) and the resulting mixture is polymerized to total or almost total conversion of said monomer.
(d) The living polymeric chains obtained in step (c) are coupled by means of a polyfunctional coupling agent.
(e) The branched block copolymer is recovered from the coupling reaction mixture of step (d).

The precursor block copolymer of the block copolymer of general formula (III) with block HT may be prepared as follows:
(a) A mixture of diene and vinylaromatic monomers is polymerized, by means of the living polymer technique, to total or almost total conversion of the monomers.
   In this step, as the monomers react in accordance with their reactivity, a polydiene block is first formed, which will grow until the amount of diene becomes so small that it is dispersed in the mass of vinylaromatic monomer (e.g. styrene) so as to form a tapered copolymer block linked to the above polydiene block. When all of the diene has reacted, the vinylaromatic monomer polymerizes, thereby forming a polyvinylaromatic block. Consequently, if butadiene and styrene are used, this step results in a living polymer with three blocks, i.e., polybutadiene-T-A, where T is a tapered non-hydrogenated butadiene-styrene copolymer block and A is a polystyrene block.
(b) Diene monomer is added to the product of step (a) and the resulting mixture is polymerized, by means of the living polymer technique, to total or almost total conversion of the diene monomer fed.
(c) Vinylaromatic monomer is added to the product of step (b) and the resulting mixture is polymerized to total or almost total conversion of the vinylaromatic monomer fed.
(d) The living polymer is stopped (quenched) with a proton-generating substance (for example, H₂O).
(e) The copolymer is recovered from the polymerization mixture.

For the synthesis of the precursor copolymer of the branched block copolymer of formula (III) without copolymeric segment HT (i.e., the percentage of block HT, in the final hydrogenated and epoxidized copolymer, equals 0), the following procedure may be adopted:
(a) Diene monomer is polymerized, by means of the living polymer technique, to total or almost total conversion.
(b) Vinylaromatic monomer is added to the product of step (a) and the resulting mixture is polymerized to total or almost total conversion of said monomer.
(c) Diene monomer is added to the product of step (b) and the resulting mixture is polymerized to total or almost total conversion of the diene monomer.
(d) Vinylaromatic monomer is added to the product of step (c) and the resulting mixture is polymerized to total or almost total conversion of the vinylaromatic monomer.
(e) The living polymer of step (d) is stopped by means of a proton-generating substance (such as H₂O).
(f) The copolymer is recovered from the polymerization mixture of step (e).

A more detailed description of the synthesis conditions of some of the precursors of the copolymers of formulae (I), (II) and (III) will be given in the examples below.

The present invention also provides the operating conditions for the partial hydrogenation of the diene-derived unsaturations present in the precursor copolymers (before the partial hydrogenation and epoxidation) of the copolymers of the present invention.

The present invention further provides a process for the preparation of the block copolymers comprising (a) the preparation of the corresponding non-hydrogenated and non-epoxidized precursor polymers and then (b) the partial hydrogenation and (c) the subsequent full epoxidation of said precursor polymers, wherein:
step (b) is carried out at a hydrogen pressure of from 0.138 to 6.89 MPa (20 to 1000 psi) and at a temperature of from 30 to 200°C in the presence of a hydrogenation catalyst; and
step (c) is carried out by dissolving the partially hydrogenated block copolymer obtained from step (b) in an aliphatic hydrocarbon, adding formic acid to the resulting solution and heating the reaction mixture to a temperature of from 50 to 100°C and then adding hydrogen peroxide to obtain the resulting epoxidized polymer.

This hydrogenation is preferably carried out by using catalysts based on nickel (e.g., nickel naphthenate or Ni-acetyl-acetonate reduced with aluminium alkyls), leaving reaction sites for the subsequent epoxidation.

The epoxidation of unsaturated polymers is already known in the art (see for example Dh. Schulz & al. RUBBER CHEMISTRY AND TECHNOLOGY 55, 809 (1982)). Generally the oxidant for the double bond is a peracid prepared prior to the reaction or, alternatively, prepared in the reaction medium (in situ) by means of combinations of organic acids and hydrogen peroxide, optionally in the presence of strong acids.

Examples of pre-prepared acids suitable for the present purpose include peracetic acid and m-chloro perbenzoic acid whereas among the acids prepared "in situ", the best results are usually obtained with formic acid and its mixtures with acetic acid, the latter optionally in the presence of a cationic resin, or a strong acid (such as H₂SO₄ or toluene sulphonic acid).

In accordance with the known art, the epoxidation reaction may conveniently be carried out in the polymer solution where the hydrogenation took place or, alternatively, the polymer, after partial hydrogenation, may be precipitated and re-dissolved in a suitable solvent such as toluene, benzene or hexane and the epoxidation may be carried out with this new solution.

However, the epoxidation of polymers having a molecular weight which is higher than 60,000 usually leads to the production of gels in the reaction mixture, especially when the solvent used is cyclohexane and the epoxidizing agent is performic acid (see, for example, K. Udipi, J. OF APPLIED POLYMER SCIENCE Vol. 23, 3311-3321 (1979)). In any case there is a considerable conversion of the oxirane rings which results in ester and alcohol groups.

The present invention also involves the finding that the above-mentioned problems may be entirely overcome when the epoxidation is carried out on polyvinylaromatic-polydiene block copolymers partially saturated with hydrogen, resulting in materials in which the oxirane rings formed by the oxidation of the 1,4-cis and 1,4-trans double bonds are situated within the (main) polymeric chain and for this reason are particularly stable to hydrolysis during the epoxidation reaction.

In this way it is possible to prepare, without any restrictions regarding the molecular weight, products containing up to 20% of non-hydrolyzed epoxy groups (with respect to the double bonds present before hydrogenation), thereby obtaining the polymers of formulae (I), (II) and (III).

Due to the stability of the reaction products, the epoxidation reaction can be carried out under drastic conditions, e.g., with temperatures ranging from 50 to 90°C (preferably about 70°C) using, e.g., performic acid prepared "in situ". The result thereof is a high reaction rate and an almost total conversion of the residual double bonds into epoxy groups.

It is widely known that the use of hydrogenated styrene-diene copolymers is extremely advantageous in the modification of a vast range of mixtures composed of polymers such as polyolefins (e.g. polyethylene). The interphase adhesion of the different polymeric phases is in fact sufficient for these blends as an excellent dispersion of the elastomer is obtained.

If styrene-diene-copolymers are mixed with polymeric materials having polar groups (polycarbonates, polyamides, polyphenylene oxide etc.) chemical reactions and dipole-dipole interactions are necessary if a sufficient interface adhesion of the various phases is to be obtained. The use of hydrogenated and epoxidized block copolymers allows for an excellent dispersion of the elastomer in the engineering polymer, thereby considerably improving the impact strength with respect to the corresponding mixtures prepared with non-modified polymers.

In fact, linear, branched and multiblock copolymers represented by general formulae (I), (II) and (III), blended with polar plastomers, such as polyethylene terephthalate, polybutylene terephthalate, nylon and epoxy resins, result in materials of excellent impact strength.

Similarly, hydrogenated styrene-diene block copolymers may be used in formulations with hydrocarbon resins and other additives in compositions employed in the field of sealants. However, because of their non-polar nature together with their high cohesion properties, these mixtures afford sealants with typically poor adhesion to polar substrates.

The use of mixtures containing hydrogenated and epoxidized block copolymers of this invention in the field of sealants results in products which show excellent adhesion to polar substrates, at the same time retaining the cohesion properties typical of these materials.

The following examples are intended to further illustrate the present invention.

### EXAMPLE 1

### Preparation of butadiene-styrene copolymers

(A) 1,200 g of anhydrous cyclohexane containing 4 g of tetrahydrofuran and 43 g of styrene are placed into a 2000 ml reactor.
Under stirring the temperature of the mixture is brought to 55°C and 0.42 g of n-butyl lithium in n-hexane solution are then added. Thirty minutes after the total conversion of the styrene (T=60°C), 101 g of butadiene are fed, with a consequent temperature rise to 100°C, within about 10 minutes. Thereafter 0.79 g of diphenyl dichloro silane dissolved in cyclohexane are added and the resulting mixture is kept under stirring for a further 5 minutes until the coupling reaction of the living chains is complete. Copolymer A with the characteristics shown in Table 1 is thus obtained.
(B) By following the procedure described under (A), but using 0.27 g of SiCl₄ instead of diphenyl dichloro silane, radial copolymer B is prepared, said copolymer having the characteristics shown in Table 1.
(C) 1,200 g of anhydrous cyclohexane containing 4 g of THF and 16 g of butadiene are placed into a 2000 ml reactor and 0.42 g of sec. butyl lithium are added at a temperature of 50°C.
After 10 min. when the temperature of the reaction mixture has reached 55°C, 92 g of styrene are added until the temperature has risen to 58°C and then 92 g of butadiene are added. When the temperature has reached 85°C, 0.28 g of SiCl₄ dissolved in cyclohexane are added, thereby coupling the living polymer chains to afford polymer C of the type (B₁-T-A-B₂)ₙX where B₁ and B₂ are polybutadiene blocks, T is a tapered copolymeric segment and A is a polystyrene block. The macro-micromolecular characteristics of said copolymer are shown in Table 1.
(D) By following the procedure and using the same quantities of reactants as described under (A), except for using 2 g of anhydrous THF in the reaction solvent, linear copolymer D is prepared. The characteristics thereof are shown in Table 1 below.

**TABLE 1**

| Polymer | A | B | C | D |
|---|---|---|---|---|
| Mol.weight Mw (1) | 45,000 | 90,000 | 120,000 | 46,000 |
| Mol.weight Mn (1) | 42,000 | 88,000 | 110,000 | 44,000 |
| Gel (% b.w.) (2) | 0 | 0 | 0 | 0 |
| Total Styr. (% b.w.) (3) | 30 | 30 | 46 | 30 |
| 1,2 (%) (4) | 38 | 38 | 38 | 33 |
| Styr. in block A (% b.w.) (5) | 29 | 29 | 42 | 29 |

| | | | | |
|---|---|---|---|---|
| Notes: (1) Determined by GPC analysis; Mw = weight average molecular weight; Mn = number average molecular weight; | | | | |
| (2) After dissolution in toluene at 30°C for 4 hours at a concentration of 0.5% by weight | | | | |
| (3) Determined by I.R. spectroscopy | | | | |
| (4) Determined by I.R. spectroscopy | | | | |
| (5) After decomposition with OsO₄. | | | | |

### EXAMPLE 2

The hydrogenation of polymers A, B, C and D whose preparation has been described in example 1, was carried out in a 1000 ml reactor into which 500 ml of the polymeric solutions were placed under a hydrogen atmosphere.

The solutions were brought to 60°C and a catalyst (prepared by mixing nickel naphthenate and aluminium diisobutylhydride in cyclohexane in the quantities and ratios listed in Table 2) was added.

The resulting mixtures were kept under stirring for from 15 to 90 minutes under hydrogen pressures ranging from 2 to 20 atmospheres, depending on the degree of hydrogenation to be obtained.

The reaction mixtures were then transferred to a 2000 ml reactor where the catalytic residues were removed by washing with acidic water.

The following Table 2 shows the characteristics of the products obtained and the corresponding operating conditions for each of them.

In the case of polymer D, no washing with acidic water was carried out.

**TABLE 2**

| PARENT POL. | HYDROG. PRESSURE (Atm) MPa | HYDROG. TIME (min) | CAT. AMOUNT g/100g polym. | Al/Ni RATIO moles/moles | HYDROG. DEGREE % (*) | RES. 1,2 % (**) | HYDROG. POLYMER |
|---|---|---|---|---|---|---|---|
| A | (20) 2.0 | 15 | 0.3 | 3/1 | 80.4 | 0 | E |
| | (20) 2.0 | 90 | 0.3 | 3/1 | 97.5 | 0 | F |
| B | (20) 2.0 | 15 | 0.35 | 3/1 | 84.6 | 0 | G |
| | (20) 2.0 | 90 | 0.35 | 3/1 | 98.0 | 0 | H |
| C | (20) 2.0 | 60 | 0.3 | 3/1 | 93.9 | 0 | I |
| | (20) 2.0 | 90 | 0.3 | 3/1 | 97.5 | 0 | L |
| D | (6) 0.6 | 15 | 0.1 | 3/1 | 61.1 | 0 | M |

| | | | | | | | |
|---|---|---|---|---|---|---|---|
| (*) Referred to the soft segment | | | | | | | |
| (**) Residual 1,2 double bonds | | | | | | | |

### EXAMPLE 3

### Epoxidation

The epoxidation was carried out with the polymer solutions in cyclohexane by adding formic acid and hydrogen peroxide in a molar ratio of 1:1. The optimum molar ratio of formic acid and hydrogen peroxide to double bonds present was from 2:1 to 3:1.

The polymeric solutions to which formic acid had been added were brought to a temperature of 70°C and H₂O₂ (28% b.w.) was added dropwise over 5 to 30 minutes, whereafter the resulting reaction mixture was kept at 70°C for 1 to 5 hours.

In this way, the epoxidation reaction was completed and both the hydrogen peroxide and the formic acid were entirely eliminated. After completion of the epoxidation reaction, the polymer was coagulated by adding isopropyl alcohol, and then dried in an oven under vacuum at 60°C for 4 hours. On the resulting product the volumetric determination of the epoxide content was carried out with HBr formed "in situ" through the reaction of ammonium tetraethyl bromide and perchlorid acid in a non-aqueous solvent by following the method of Jay (Anal. Chem. 36 (3), 1964, 67).

The polymers prepared as described above did not show any insoluble fractions and according to GPC analysis, had molecular weight distributions very similar to those of the parent (precursor) polymers.

Table 3 shows the conditions used to obtain, starting from the partially hydrogenated polymers E, G, I and L, the corresponding epoxidized polymers N, O, P and Q.

In the case of the partially hydrogenated polymer M, the corresponding epoxidation reaction was carried out directly in the solution containing the catalytic residues present after hydrogenation.

**TABLE 3**

| PARENT POLYM. | HYDROG. DEGREE (%) | FORM ACID g/100g polym; | H₂O₂ g/100g polym. | React. time hrs | Epoxide Oxyg. (1) | Ep. Yield (with resp. to double bonds) | EPOXID. COPOLYMER |
|---|---|---|---|---|---|---|---|
| E | 80.4 | 27.7 | 21.5 | 4 | 3.9 | 96 | N |
| G | 84.6 | 26.3 | 21.2 | 3 | 3.1 | 97 | O |
| I | 93.9 | 15.4 | 8.7 | 2.5 | 0.93 | 96 | P |
| L | 97.5 | 3.6 | 2.8 | 1.5 | 0.37 | 93 | Q |
| M | 61.1 | 71.0 | 51.5 | 5 | 7.8 | 96 | R |

| | | | | | | | |
|---|---|---|---|---|---|---|---|
| (1) g Epoxidic Oxygen per 100 g of polymer | | | | | | | |

### EXAMPLE 4

### Evaluation of epoxidized copolymers in formulations for sealants

Block copolymers N and F whose main characteristics are shown in the following Table 4 and which had been obtained by means of the previously described methods, were used for the preparation of an application mixture (recipe 1) in the field of sealants.

### RECIPE 1

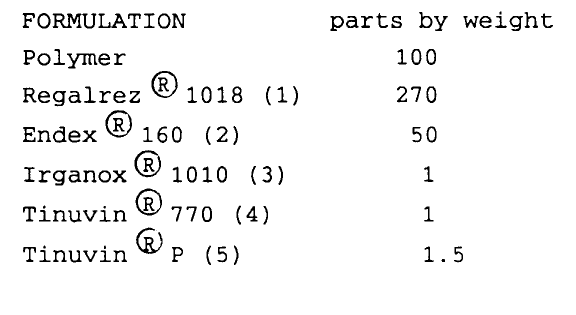

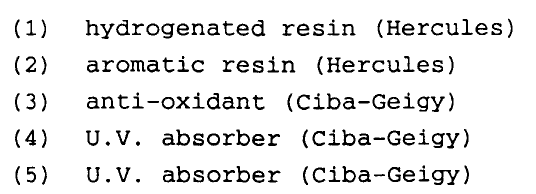

**TABLE 4**

| PROPERTIES | POLYMER N | POLYMER F |
|---|---|---|
| STYRENE (% b.w.) | 30 | 30 |
| Mw | 45,000 | 45,000 |
| %x OXIRANE OXYGEN | 3.9 | 0 |
| ULTIMATE TENSILE STRENGTH (MPa) | 29 | 30 |
| ELONGATION AT BREAK (%) | 540 | 550 |
| DENSITY (g/cm³) | 0.92 | 0.92 |

The mixtures were prepared by using a mixer with sigma blades for 45 minutes at 180°C.

Table 5 shows the results obtained in the 180° peel adhesion test on glass, aluminium and steel with the formulation of "recipe 1" containing polymers N or F.

**TABLE 5**

| | FORMULATION WITH POLYMER F | FORMULATION WITH POLYMER N |
|---|---|---|
| ULTIMATE TENSILE STRENGTH (MPa) | 2.36 | 2.28 |
| 100% MODULUS (MPa) | 320 | 450 |
| ELONGATION AT BREAK | 750 | 800 |
| 180° PEEL ON GLASS (KN/m) | 6.1(A) | 14.6 (A) |
| 180° PEEL ON STEEL (KN/m) | 4.7 (A) | 13.2 (A) |
| 180° PEEL ON ALUMINIUM (KN/m) | 2.4 (A) | 11.5 (A) |

| | | |
|---|---|---|
| (A) = Adhesive Failure | | |

### EXAMPLE 5

Mixtures of a poly(2,6-dimethylphenyl) ether having an intrinsic viscosity in chloroform at 30°C of 0.33 dl/g, a polyterephthalate (produced by Nippon Unipet Co., Ltd.) and each of the modified block copolymers N, O, P, Q and R and the unmodified copolymer F were dried in air for 5 hours at 120°C and mixed in a BRABENDER mixer at 280°C for 5 minutes.

The quantities of the components of the mixtures used (in parts by weight) are shown in Table 6 below.

The results obtained were evaluated in the following respects:
1) DYNSTAT IMPACT STRENGTH
   measured in accordance with BS-1330-1946 (at 23°C)
2) SOLVENT RESISTANCE
   measured in accordance with the BERGEN method (S.P.E. Journal 667 (1962))
3) PLATE SEPARATION
   A sample obtained by heat compression is bent and broken and a visual examination of the breakage area is carried out to verify the presence or absence of plate separation.

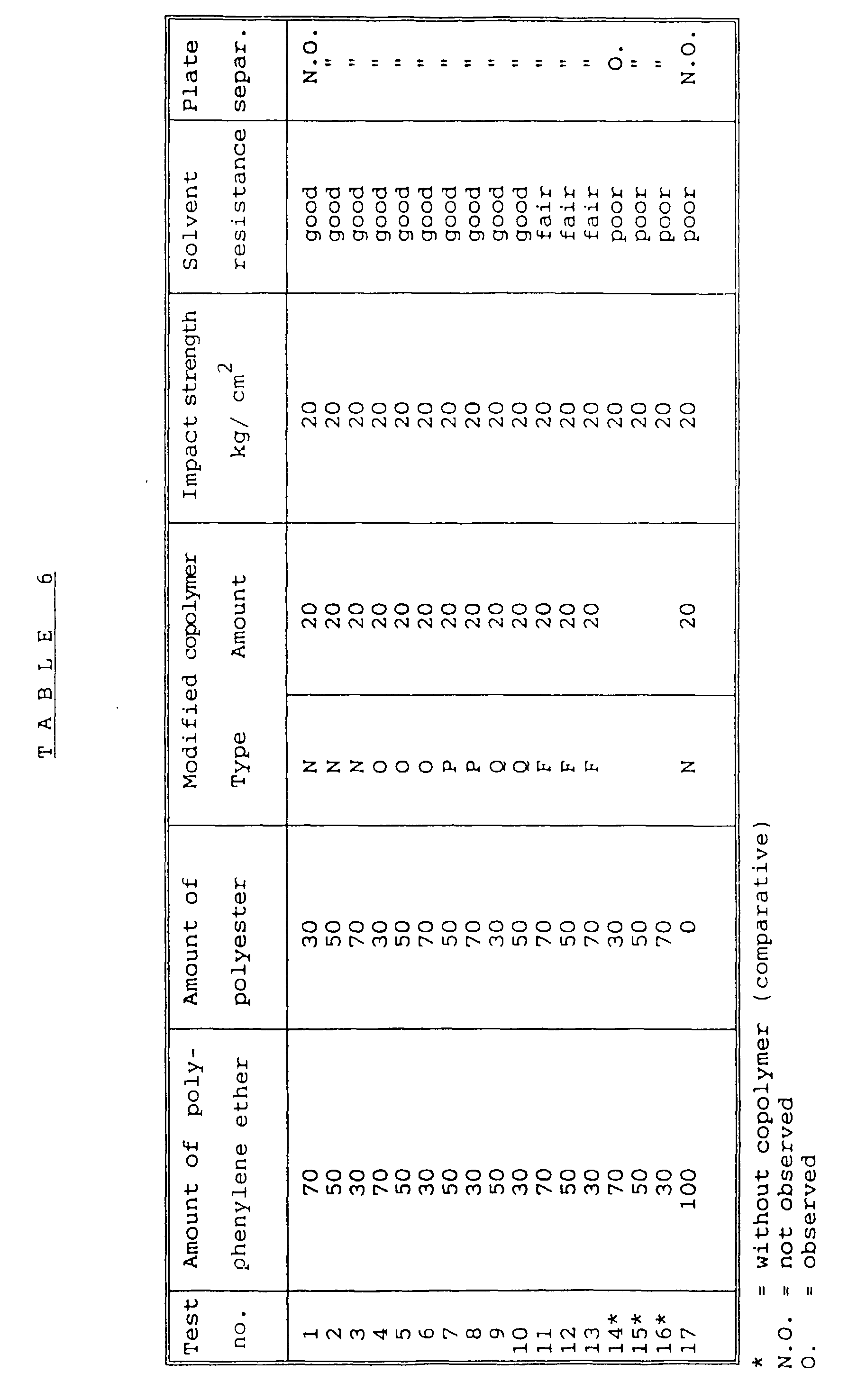

## Claims (Claims for the following Contracting State(s): AT, BE, CH, LI, DE, DK, FR, GB, GR, IT, LU, NL, PT, SE)

1. Linear or branched block copolymers, deriving from the block copolymerization of vinylaromatic and diene monomers, wherein the polydiene blocks have been partially hydrogenated and subsequently fully epoxidized, represented by general formula (I):
[A- (E-B-EPOX)]ₙX (I)
wherein
A represents a polyvinylaromatic block, (E-B-EPOX) is a hydrogenated poly(1,3-diene) block containing epoxy units of the 1,4-cis and/or 1,4-trans type, distributed along the polymeric chain, n is an integer of from 1 to 20 and X is a coupling radical of valence n; said copolymers having an average molecular weight of from 30,000 to 400,000, a content of polyvinylaromatic blocks of from 10 to 50% by weight and a content of EPOX units ranging from 1 to 20% of the unsaturations initially present in the polymer before the partial hydrogenation thereof.

2. Linear or branched block copolymers, deriving from the block copolymerization of vinylaromatic and diene monomers, wherein the polydiene blocks have been partially hydrogenated and subsequently fully epoxidized, represented by general formula (II):
[(E₁-B₁-EPOX₁)-HT-A-(E₂-B₂-EPOX₂)]ₙX (II)
wherein
A represents a polyvinylaromatic block accounting for 10 to 50% by weight of the total copolymer;
HT is a tapered copolymeric segment composed of vinylaromatic and diene units and is present in amounts of from 0 to 20% by weight of the total copolymer, the initial unsaturations of said tapered copolymeric segment having been partially hydrogenated and subsequently fully epoxidized;
(E₁-B₁-EPOX₁) and (E₂-B₂-EPOX₂) represent hydrogenated poly(1,3-diene) blocks containing epoxy units of the 1,4-cis and/or 1,4-trans type deriving from the epoxidation of from 1 to 20% of the unsaturations initially present therein before the hydrogenation, said copolymer blocks together accounting for 50 to 90% by weight of the total copolymer and the weight ratio of blocks (E₁-B₁-EPOX₁) to blocks (E₂-B₂-EPOX₂) ranging from 0.1:1 to 1.0:1;
n is an integer of from 1 to 20; and X is a coupling radical of valence n;
the average molecular weight of the block copolymers of formula (II) being from 30,000 to 400,000.

3. Linear block copolymers deriving from the block copolymerization of vinylaromatic and diene monomers, wherein the polydiene blocks have been partially hydrogenated and then fully epoxidized, represented by general formula (III):
A₁-(E₁-B₁-EPOX₁)-A₂-HT-(E₂-B₂-EPOX₂) (III)
wherein
A₁ and A₂ represent polyvinylaromatic blocks;
HT is a tapered copolymeric segment composed of vinylaromatic and diene units which accounts for from 0 to 20% by weight of the total copolymer, the initial unsaturations of said tapered copolymeric segment having been partially hydrogenated and subsequently fully epoxidized;
(E₁-B₁-EPOX₁) and (E₂-B₂-EPOX₂) represent hydrogenated poly(1,3-diene) blocks containing epoxy units of the 1,4-cis and/or 1,4-trans type deriving from the epoxidation of 1 to 20% of the unsaturations initially present therein before the partial hydrogenation, said copolymer blocks together accounting for 50 to 90% by weight of the total copolymer and the weight ratio of blocks (E₁-B₁-EPOX₁) to blocks (E₂-B₂-EPOX₂) ranging from 0.1:1 to 1.0:1;
the average molecular weight of the block copolymers of formula (III) being from 30,000 to 400,000.

4. Block copolymers according to any one of claims 1 and 2 wherein n ranges from 1 to 4.

5. Block copolymers according to any one of the preceding claims wherein the polyvinylaromatic block(s) is (are) polystyrene block(s) and/or the poly(1,3-diene) blocks are polybutadiene blocks.

6. Process for the preparation of the block copolymers according to any one of claims 1 to 5, comprising (a) the preparation of the corresponding non-hydrogenated and non-epoxidized precursor polymers and then (b) the partial hydrogenation and (c) the subsequent full epoxidation of said precursor polymers, wherein:
step (b) is carried out at a hydrogen pressure of from 0.138 to 6.89 MPa (20 to 1000 psi) and at a temperature of from 30 to 200°C in the presence of a hydrogenation catalyst; and
step (c) is carried out by dissolving the partially hydrogenated block copolymer obtained from step (b) in an aliphatic hydrocarbon, adding formic acid to the resulting solution and heating the reaction mixture to a temperature of from 50 to 100°C and then adding hydrogen peroxide to obtain the resulting epoxidized polymer.

7. Process according to claim 6, wherein in step (b) the hydrogen pressure ranges from 1.03 to 4.13 MPa (150 to 600 psi), the temperature ranges from 40 to 130°C and the hydrogenation catalyst has been obtained by contacting an alkyl aluminum compound with a compound of nickel and/or cobalt, preferably by contacting an alkyl aluminum compound with a nickel compound for 4 to 120 minutes.

8. Process according to any one of claims 6 and 7, wherein in step (c)
a) the aliphatic hydrocarbon is selected from cyclohexane, n-hexane and mixtures thereof; and/or
b) the molar ratio of formic acid to the double bonds of the partially hydrogenated polymer ranges from 5:1 to 2:1, particularly from 3:1 to 2:1; and/or
c) the molar ratio of hydrogen peroxide to the double bonds of the partially hydrogenated polymer ranges from 5:1 to 2:1, particularly from 3:1 to 2:1; and/or
d) the molar ratio of hydrogen peroxide to formic acid is about 1:1, e.g. from about 0.9:1 to 1.1:1; and/or
e) the reaction temperature ranges from 60 to 90°C; and/or
f) the feeding time of the hydrogen peroxide ranges from 1 to 60 and, particularly, from 5 to 30 minutes; and/or
g) the total duration of the reaction is from 1 to 5, particularly from 2 to 4 hours.

9. Use of the block copolymers according to any one of claims 1 to 5 for the modification of engineering polymers and in the field of adhesives and sealants.

## Claims (Claims for the following Contracting State(s): ES)

1. Process for the preparation of linear or branched block copolymers, deriving from the block copolymerization of vinylaromatic and diene monomers, wherein the polydiene blocks have been partially hydrogenated and subsequently fully epoxidized, represented by general formula (I):
[A-(E-B-EPOX)]ₙX (I)
wherein
A represents a polyvinylaromatic block, (E-B-EPOX) is a hydrogenated poly(1,3-diene) block containing epoxy units of the 1,4-cis and/or 1,4-trans type, distributed along the polymeric chain, n is an integer of from 1 to 20 and X is a coupling radical of valence n;
said copolymers having an average molecular weight of from 30,000 to 400,000, a content of polyvinylaromatic blocks of from 10 to 50% by weight and a content of EPOX units ranging from 1 to 20% of the unsaturations initially present in the polymer before the partial hydrogenation thereof,
wherein said process is characterized by comprising (a) the preparation of the corresponding non-hydrogenated and non-epoxidized precursor polymers and then (b) the partial hydrogenation and (c) the subsequent full epoxidation of said precursor polymers, wherein:
step (b) is carried out at a hydrogen pressure of from 0.138 to 6.89 MPa (20 to 1000 psi) and at a temperature of from 30 to 200°C in the presence of a hydrogenation catalyst; and
step (c) is carried out by dissolving the partially hydrogenated block copolymer obtained from step (b) in an aliphatic hydrocarbon, adding formic acid to the resulting solution and heating the reaction mixture to a temperature of from 50 to 100°C and then adding hydrogen peroxide to obtain the resulting epoxidized polymer.

2. Process for the preparation of linear or branched block copolymers, deriving from the block copolymerization of vinylaromatic and diene monomers, wherein the polydiene blocks have been partially hydrogenated and subsequently fully epoxidized, represented by general formula (II) :
[(E₁-B₁-EPOX₁)-HT-A-(E₂-B₂-EPOX₂)]ₙX (II)
wherein
A represents a polyvinylaromatic block accounting for 10 to 50% by weight of the total copolymer;
HT is a tapered copolymeric segment composed of vinylaromatic and diene units and is present in amounts of from 0 to 20% by weight of the total copolymer, the initial unsaturations of said tapered copolymeric segment having been partially hydrogenated and subsequently fully epoxidized;
(E₁-B₁-EPOX₁) and (E₂-B₂-EPOX₂) represent hydrogenated poly(1,3-diene) blocks containing epoxy units of the 1,4-cis and/or 1,4-trans type deriving from the epoxidation of from 1 to 20% of the unsaturations initially present therein before the hydrogenation, said copolymer blocks together accounting for 50 to 90% by weight of the total copolymer and the weight ratio of blocks (E₁-B₁-EPOX₁) to blocks (E₂-B₂-EPOX₂) ranging from 0.1:1 to 1.0:1;
n is an integer of from 1 to 20; and X is a coupling radical of valence n;
the average molecular weight of the block copolymers of formula (II) being from 30,000 to 400,000,
wherein said process is characterized by comprising (a) the preparation of the corresponding non-hydrogenated and non-epoxidized precursor polymers and then (b) the partial hydrogenation and (c) the subsequent full epoxidation of said precursor polymers, wherein:
step (b) is carried out at a hydrogen pressure of from 0.138 to 6,89 MPa (20 to 1000 psi) and at a temperature of from 30 to 200°C in the presence of a hydrogenation catalyst; and step (c) is carried out by dissolving the partially hydrogenated block copolymer obtained from step (b) in an aliphatic hydrocarbon, adding formic acid to the resulting solution and heating the reaction mixture to a temperature of from 50 to 100°C and then adding hydrogen peroxide to obtain the resulting epoxidized polymer.

3. Process for the preparation of linear block copolymers, deriving from the block copolymerization of vinylaromatic and diene monomers, wherein the polydiene blocks have been partially hydrogenated and then fully epoxidized, represented by general formula (III):
A₁-(E₁-B₁-EPOX₁)-A₂-HT-(E₂-B₂-EPOX₂) (III)
wherein
A₁ and A₂ represent polyvinylaromatic blocks;
HT is a tapered copolymeric segment composed of vinylaromatic and diene units which accounts for from 0 to 20% by weight of the total copolymer, the initial unsaturations of said tapered copolymeric segment having been partially hydrogenated and subsequently fully epoxidized;
(E₁-B₁-EPOX₁) and (E₂-B₂-EPOX₂) represent hydrogenated poly(1,3-diene) blocks containing epoxy units of the 1,4-cis and/or 1,4-trans type deriving from the epoxidation of 1 to 20% of the unsaturations initially present therein before the partial hydrogenation, said copolymer blocks together accounting for 50 to 90% by weight of the total copolymer and the weight ratio of blocks (E₁-B₁-EPOX₁) to blocks (E₂-B₂-EPOX₂) ranging from 0.1:1 to 1.0:1;
the average molecular weight of the block copolymers of formula (III) being from 30,000 to 400,000,
wherein said process is characterized by comprising (a) the preparation of the corresponding non-hydrogenated and non-epoxidized precursor polymers and then (b) the partial hydrogenation and (c) the subsequent full epoxidation of said precursor polymers, wherein:
step (b) is carried out at a hydrogen pressure of from 0.138 to 6.89 MPa (20 to 1000 psi) and at a temperature of from 30 to 200°C in the presence of a hydrogenation catalyst; and
step (c) is carried out by dissolving the partially hydrogenated block copolymer obtained from step (b) in an aliphatic hydrocarbon, adding formic acid to the resulting solution and heating the reaction mixture to a temperature of from 50 to 100°C and then adding hydrogen peroxide to obtain the resulting epoxidized polymer.

4. Process according to any one of claims 1 to 3, wherein in step (b) the hydrogen pressure ranges from 1.03 to 4.13 MPa (150 to 600 psi), the temperature ranges from 40 to 130°C and the hydrogenation catalyst has been obtained by contacting an alkyl aluminum compound with a compound of nickel and/or cobalt, preferably by contacting an alkyl aluminum compound with a nickel compound for 4 to 120 minutes.

5. Process according to any one of claims 1 to 4, wherein in step (c)
a) the aliphatic hydrocarbon is selected from cyclohexane, n-hexane and mixtures thereof; and/or
b) the molar ratio of formic acid to the double bonds of the partially hydrogenated polymer ranges from 5:1 to 2:1, particularly from 3:1 to 2:1; and/or
c) the molar ratio of hydrogen peroxide to the double bonds of the partially hydrogenated polymer ranges from 5:1 to 2:1, particularly from 3:1 to 2:1; and/or
d) the molar ratio of hydrogen peroxide to formic acid is about 1:1, e.g. from about 0.9:1 to 1.1:1; and/or
e) the reaction temperature ranges from 60 to 90°C; and/or
f) the feeding time of the hydrogen peroxide ranges from 1 to 60 and, particularly, from 5 to 30 minutes; and/or
g) the total duration of the reaction is from 1 to 5, particularly from 2 to 4 hours.

6. Linear or branched block copolymers, deriving from the block copolymerization of vinylaromatic and diene monomers, wherein the polydiene blocks have been partially hydrogenated and subsequently fully epoxidized, represented by general formula (I):
[A-(E-B-EPOX)]ₙX (I)
wherein
A represents a polyvinylaromatic block, (E-B-EPOX) is a hydrogenated poly(1,3-diene) block containing epoxy units of the 1,4-cis and/or 1,4-trans type, distributed along the polymeric chain, n is an integer of from 1 to 20 and X is a coupling radical of valence n;
said copolymers having an average molecular weight of from 30,000 to 400,000, a content of polyvinylaromatic blocks of from 10 to 50% by weight and a content of EPOX units ranging from 1 to 20% of the unsaturations initially present in the polymer before the partial hydrogenation thereof.

7. Linear or branched block copolymers, deriving from the block copolymerization of vinylaromatic and diene monomers, wherein the polydiene blocks have been partially hydrogenated and subsequently fully epoxidized, represented by general formula (II):
[(E₁-B₁-EPOX₁)-HT-A-(E₂-B₂-EPOX₂)]ₙX (II)
wherein
A represents a polyvinylaromatic block accounting for 10 to 50% by weight of the total copolymer;
HT is a tapered copolymeric segment composed of vinylaromatic and diene units and is present in amounts of from 0 to 20% by weight of the total copolymer, the initial unsaturations of said tapered copolymeric segment having been partially hydrogenated and subsequently fully epoxidized;
(E₁-B₁-EPOX₁) and (E₂-B₂-EPOX₂) represent hydrogenated poly(1,3-diene) blocks containing epoxy units of the 1,4-cis and/or 1,4-trans type deriving from the epoxidation of from 1 to 20% of the unsaturations initially present therein before the hydrogenation, said copolymer blocks together accounting for 50 to 90% by weight of the total copolymer and the weight ratio of blocks (E₁-B₁-EPOX₁) to blocks (E₂-B₂-EPOX₂) ranging from 0.1:1 to 1.0:1;
n is an integer of from 1 to 20; and X is a coupling radical of valence n;
the average molecular weight of the block copolymers of formula (II) being from 30,000 to 400,000.

8. Linear block copolymers deriving from the block copolymerization of vinylaromatic and diene monomers, wherein the polydiene blocks have been partially hydrogenated and then fully epoxidized, represented by general formula (III):
A₁-(E₁-B₁-EPOX₁)-A₂-HT-(E₂-B₂-EPOX₂) (III)
wherein
A₁ and A₂ represent polyvinylaromatic blocks;
HT is a tapered copolymeric segment composed of vinylaromatic and diene units which accounts for from 0 to 20% by weight of the total copolymer, the initial unsaturations of said tapered copolymeric segment having been partially hydrogenated and subsequently fully epoxidized;
(E₁-B₁-EPOX₁) and (E₂-B₂-EPOX₂) represent hydrogenated poly(1,3-diene) blocks containing epoxy units of the 1,4-cis and/or 1,4-trans type deriving from the epoxidation of 1 to 20% of the unsaturations initially present therein before the partial hydrogenation, said copolymer blocks together accounting for 50 to 90% by weight of the total copolymer and the weight ratio of blocks (E₁-B₁-EPOX₁) to blocks (E₂-B₂-EPOX₂) ranging from 0.1:1 to 1.0:1;
the average molecular weight of the block copolymers of formula (III) being from 30,000 to 400,000.

9. Block copolymers according to any one of claims 6 and 7 wherein n ranges from 1 to 4.

10. Block copolymers according to any one of claims 6 to 9 wherein the polyvinylaromatic block(s) is (are) polystyrene block(s) and/or the poly(1,3-diene) blocks are polybutadiene blocks.

11. Use of the block copolymers according to any one of claims 6 to 10 for the modification of engineering polymers and in the field of adhesives and sealants.

## Patentansprüche (Patentansprüche für folgende(n) Vertragsstaat(en): AT, BE, CH, LI, DE, DK, FR, GB, GR, IT, LU, NL, PT, SE)

1. Lineare oder verzweigte Blockcopolymere, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (I):
[A-(E-B-EPOX)]ₙX (I),
worin:
A einen aromatischen Vinylpolymerblock darstellt, (E-B-EPOX) ein hydrierter Poly(1,3-dien)-Block ist, der Epoxyeinheiten mit 1,4-cis- und/oder 1,4-trans-Struktur enthält, die entlang der Polymerkette verteilt sind, n = eine ganze Zahl von 1 bis 20 bedeutet und X eine Verbindungsgruppe mit der Wertigkeit n ist;
wobei die genannten Copolymere ein durchschnittliches Molekulargewicht von 30.000 bis 400.000 aufweisen, einen Gehalt an aromatischen Vinylpolymerblöcken von 10 bis 50 Gew.-% haben und einen Gehalt an EPOX-Einheiten von 1 - 20 % der ungesättigten Bindungen aufweisen, die anfänglich vor der Teilhydrierung desselben in dem Polymer anwesend waren.

2. Lineare oder verzweigte Blockcopolymere, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (II):
[(E₁-B₁-EPOX₁)-HT-A-(E₂-B₂-EPOX₂)]ₙX (II)
worin:
A einen aromatischen Vinylpolymerblock darstellt, der 10 bis 50 Gew.-% des gesamten Copolymers ausmacht; HT ein copolymer-Segment mit allmählich verändertem Komponentengehalt darstellt, zusammengesetzt aus aromatischen Vinyl- und Dien-Einheiten, das in Mengen von 0 bis 20 Gew.-% des gesamten Copolymers anwesend ist, wobei die ursprünglichen ungesättigten Bindungen des genannten Copolymer-Segments teilweise hydriert und nachfolgend vollständig epoxidiert wurden;
(E₁-B₁-EPOX₁) und (E₂-B₂-EPOX₂) hydrierte Poly(1,3-dien)-Blöcke darstellen, die Epoxyeinheiten mit 1,4-cis- und/oder 1,4-trans-Struktur enthalten, erhalten durch die Epoxidierung von 1 bis 20 % der ungesättigten Bindungen, die ursprünglich vor der Hydrierung darin anwesend waren, wobei die genannten Copolymerblöcke zusammen 50 bis 90 Gew.-% des gesamten Copolymers ausmachen und das Gewichtsverhältnis der Blöcke (E₁-B₁-EPOX₁) zu den Blöcken (E₂-B₂-EPOX₂) von 0,1:1 bis 1,0:1 beträgt;
n eine ganze Zahl von 1 bis 20 bedeutet und X eine Verbindungsgruppe mit der Wertigkeit n ist;
wobei das durchschnittliche Molekulargewicht der Blockcopolymere der Formel (II) von 30.000 bis 400.000 beträgt.

3. Lineare Blockcopolymere, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (III):
A₁-(E₁-B₁-EPOX₁)-A₂-HT-(E₂-B₂-EPOX₂) (III)
worin:
A₁ und A₂ aromatische Vinylpolymerblöcke bedeuten;
HT ein Copolymer-Segment mit allmählich verändertem Komponentengehalt darstellt, zusammengesetzt aus aromatischen Vinyl- und Dien-Einheiten, das von 0 bis 20 Gew.-% des gesamten Copolymers ausmacht, wobei die ursprünglich ungesättigten Bindungen des genannten Copolymer-Segments teilweise hydriert und nachfolgend vollständig epoxidiert wurden;
(E₁-B₁-EPOX₁) und (E₂-B₂-EPOX₂) hydrierte Poly (1,3-dien)-Blöcke darstellen, die Epoxyeinheiten mit 1,4-cis- und/oder 1,4-trans-Struktur enthalten, erhalten durch die Epoxidierung von 1 bis 20 % der ungesättigten Bindungen, die ursprünglich vor der Hydrierung darin anwesend waren, wobei die genannten Copolymerblöcke zusammen 50 bis 90 Gew.-% des gesamten Copolymers ausmachen und das Gewichtsverhältnis der Blöcke (E₁-B₁-EPOX₁) zu den Blöcken (E₂-B₂-EPOX₂) von 0,1:1 bis 1,0:1 beträgt;
wobei das durchschnittliche Molekulargewicht der Blockcopolymere der Formel (III) von 30.000 bis 400.000 beträgt.

4. Blockcopolymere nach einem der Ansprüche 1 und 2, worin n von 1 bis 4 beträgt.

5. Blockcopolymere nach einem der vorhergehenden Ansprüche, worin der aromatische Vinylpolymer-Block (Blöcke) ein Polystryrolblock (Blöcke) ist/sind und/oder die Poly(1,3-Dien)-Blöcke Polybutadien-Blöcke sind.

6. Verfahren zur Herstellung von Blockcopolymeren nach einem der Ansprüche 1 bis 5, welches umfaßt: a) die Herstellung von entsprechenden nicht-hydrierten und nicht-epoxidierten Vorläufer-Polymeren und danach b) die Teilhydrierung und c) die nachfolgende vollständige Epoxidierung der genannten Vorläufer-Polymere, worin:
Schritt b) bei einem Wasserstoffdruck von 0,138 bis 6,89 MPa (20 bis 1000 psi) und bei einer Temperatur von 30 bis 200° C in Anwesenheit eines Hydrierungskatalysators durchgeführt wird;
und Schritt c) durchgeführt wird durch Auflösen des teilhydrierten Blockcopolymers, erhalten aus Schritt b), in einem aliphatischen Kohlenwasserstoff, Zugeben von Ameisensäure zu der erhaltenen Lösung und Erhitzten der Reaktionsmischung auf eine Temperatur von 50 bis 100° C und danach Zugeben von Wasserstoffperoxid zum Erhalt des epoxidierten Polymers.

7. Verfahren nach Anspruch 6, worin in Schritt b) der Wasserstoffdruck von 1,03 bis 4,13 MPa (150 bis 600 psi), die Temperatur von 40 bis 130° C beträgt, und der Hydrierungskatalysator erhalten wurde durch Kontaktieren einer Alkylaluminiumverbindung mit einer Nickel- und/oder Kobalt-Verbindung, vorzugsweise durch Kontaktieren einer Alkylaluminiumverbindung mit einer Nickelverbindung, für eine Dauer von 4 bis 120 Minuten.

8. Verfahren nach einem der Ansprüche 6 und 7, worin in Schritt c):
a) der aliphatische Kohlenwasserstoff ausgewählt wird aus Cyclohexan, n-Hexan und Mischungen davon; und/oder
b) das Molverhältnis von Ameisensäure zu den Doppelbindungen des teilweise hydrierten Polymers von 5:1 bis 2:1, insbesondere von 3:1 bis 2:1 beträgt; und/oder
c) das Molverhältnis von Wasserstoffperoxid zu den Doppelbindungen des teilweise hydrierten Polymers von 5:1 bis 2:1, insbesondere von 3:1 bis 2:1 beträgt; und/oder
d) das Molverhältnis von Wasserstoffperoxid zu Ameisensäure etwa 1:1, z. B. von etwa 0,9:1 bis 1,1:1 beträgt; und/oder
e) die Reaktionstemperatur von 60 bis 90° C beträgt; und/oder
f) die Beschickungszeit von Wasserstoffperoxid von 1 bis 60, insbesondere von 5 bis 30 Minuten beträgt; und/oder
g) die Gesamtdauer der Umsetzung von 1 bis 5, insbesondere von 2 bis 4 Stunden beträgt.

9. Verwendung der Blockcopolymere nach einem der Ansprüche 1 bis 5 zur Modifizierung von technischen Polymeren und auf dem Gebiet von Klebstoffen und Dichtungsmitteln.

## Patentansprüche (Patentansprüche für folgende(n) Vertragsstaat(en): ES)

1. Verfahren zur Herstellung linearer oder verzweigter Blockcopolymere, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (I) :
[A-(E-B-EPOX)]ₙX (I),
worin:
A einen aromatischen Vinylpolymerblock darstellt, (E-B-EPOX) ein hydrierter Poly(1,3-dien)-Block ist, der Epoxyeinheiten mit 1,4-cis- und/oder 1,4-trans-Struktur enthält, die entlang der Polymerkette verteilt sind, n = eine ganze Zahl von 1 bis 20 bedeutet und X eine Verbindungsgruppe mit der Wertigkeit n ist;
wobei die genannten Copolymere ein durchschnittliches Molekulargewicht von 30.000 bis 400.000 aufweisen, einen Gehalt an aromatischen Vinylpolymerblöcken von 10 bis 50 Gew.-% haben und einen Gehalt an EPOX-Einheiten von 1 - 20 % der ungesättigten Bindungen aufweisen, die anfänglich vor der Teilhydrierung desselben in dem Polymer anwesend waren,
wobei das genannte Verfahren dadurch gekennzeichnet ist, daß es umfaßt: a) die Herstellung von entsprechenden nicht-hydrierten und nicht-epoxidierten Vorläufer-Polymeren und danach b) die Teilhydrierung und c) die nachfolgende vollständige Epoxidierung der genannten Vorläufer-Polymere, worin:
Schritt b) bei einem Wasserstoffdruck von 0,138 bis 6,89 MPa (20 bis 1000 psi) und bei einer Temperatur von 30 bis 200° C in Anwesenheit eines Hydrierungskatalysators durchgeführt wird;
und Schritt c) durchgeführt wird durch Auflösen des teilhydrierten Blockcopolymers, erhalten aus Schritt b), in einem aliphatischen Kohlenwasserstoff, Zugeben von Ameisensäure zu der erhaltenen Lösung und Erhitzen der Reaktionsmischung auf eine Temperatur von 50 bis 100° C und danach Zugeben von Wasserstoffperoxid zum Erhalt des epoxidierten Polymers.

2. Verfahren zur Herstellung linearer oder verzweigter Blockcopolymere, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (II):
[(E₁-B₁-EPOX₁)-HT-A-(E₂-B₂-EPOX₂)]ₙX (II)
worin:
A einen aromatischen Vinylpolymerblock darstellt, der 10 bis 50 Gew.-% des gesamten Copolymers ausmacht; HT ein Copolymer-Segment mit allmählich verändertem Komponentengehalt darstellt, zusammengesetzt aus aromatischen Vinyl- und Dien-Einheiten, das in Mengen von 0 bis 20 Gew.-% des gesamten Copolymers anwesend ist, wobei die ursprünglichen ungesättigten Bindungen des genannten Copolymer-Segments teilweise hydriert und nachfolgend vollständig epoxidiert wurden; (E₁-B₁-EPOX₁) und (E₂-B₂-EPOX₂) hydrierte Poly (1,3-dien)-Blöcke darstellen, die Epoxyeinheiten mit 1,4-cis- und/oder 1,4-trans-Struktur enthalten, erhalten durch die Epoxidierung von 1 bis 20 % der ungesättigten Bindungen, die ursprünglich vor der Hydrierung darin anwesend waren, wobei die genannten Copolymerblöcke zusammen 50 bis 90 Gew.-% des gesamten Copolymers ausmachen und das Gewichtsverhältnis der Blöcke (E₁-B₁-EPOX₁) zu den Blöcken (E₂-B₂-EPOX₂) von 0,1:1 bis 1,0:1 beträgt;
n eine ganze Zahl von 1 bis 20 bedeutet und X eine Verbindungsgruppe mit der Wertigkeit n ist;
wobei das durchschnittliche Molekulargewicht der Blockcopolymere der Formel (II) von 30.000 bis 400.000 beträgt, wobei das genannte Verfahren dadurch gekannzeichnet ist, daß es umfaßt: a) die Herstellung von entsprechenden nicht-hydrierten und nicht-epoxidierten Vorläufer-Polymeren und danach b) die Teilhydrierung und c) die nachfolgende vollständige Epoxidierung der genannten Vorläufer-Polymere, worin:
Schritt b) bei einem Wasserstoffdruck von 0,138 bis 6,89 MPa (20 bis 1000 psi) und bei einer Temperatur von 30 bis 200° C in Anwesenheit eines Hydrierungskatalysators durchgeführt wird;
und Schritt c) durchgeführt wird durch Auflösen des teilhydrierten Blockcopolymers, erhalten aus Schritt b), in einem aliphatischen Kohlenwasserstoff, Zugeben von Ameisensäure zu der erhaltenen Lösung und Erhitzen der Reaktionsmischung auf eine Temperatur von 50 bis 100° C und danach Zugeben von Wasserstoffperoxid zum Erhalt des epoxidierten Polymers.

3. Verfahren zur Herstellung eines linearen Blockcopolymers, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (III):
A₁-(E₁-B₁-EPOX₁)-A₂-HT-(E₂-B₂-EPOX₂) (III)
worin:
A₁ und A₂ aromatische Vinylpolymerblöcke bedeuten;
HT ein Copolymer-Segment mit allmählich verändertem Komponentengehalt darstellt, zusammengesetzt aus aromatischen Vinyl- und Dien-Einheiten, das von 0 bis 20 Gew.-% des gesamten Copolymers ausmacht, wobei die ursprünglich ungesättigten Bindungen des genannten Copolymer-Segments teilweise hydriert und nachfolgend vollständig epoxidiert wurden;
(E₁-B₁-EPOX₁) und (E₂-B₂-EPOX₂) hydrierte Poly(1,3-dien)-Blöcke darstellen, die Epoxyeinheiten mit 1,4-cis- und/oder 1,4-trans-Struktur enthalten, erhalten durch die Epoxidierung von 1 bis 20 % der ungesättigten Bindungen, die ursprünglich vor der Hydrierung darin anwesend waren, wobei die genannten Copolymerblöcke zusammen 50 bis 90 Gew.-% des gesamten Copolymers ausmachen und das Gewichtsverhältnis der Blöcke (E₁-B₁-EPOX₁) zu den Blöcken (E₂-B₂-EPOX₂) von 0,1:1 bis 1,0:1 beträgt;
wobei das durchschnittliche Molekulargewicht der Blockcopolymere der Formel (III) von 30.000 bis 400.000 beträgt,
worin das genannte Verfahren dadurch gekennzeichnet ist, daß es umfaßt: a) die Herstellung von entsprechenden nicht-hydrierten und nicht-epoxidierten Vorläufer-Polymeren und danach b) die Teilhydrierung und c) die nachfolgende vollständige Epoxidierung der genannten Vorläufer-Polymere, worin:
Schritt b) bei einem Wasserstoffdruck von 0,138 bis 6,89 MPa (20 bis 1000 psi) und bei einer Temperatur von 30 bis 200° C in Anwesenheit eines Hydrierungskatalysators durchgeführt wird;
und Schritt c) durchgeführt wird durch Auflösen des teilhydrierten Blockcopolymers, erhalten aus Schritt b), in einem aliphatischen Kohlenwasserstoff, Zugeben von Ameisensäure zu der erhaltenen Lösung und Erhitzen der Reaktionsmischung auf eine Temperatur von 50 bis 100° C und danach Zugeben von Wasserstoffperoxid zum Erhalt des epoxidierten Polymers.

4. Verfahren nach einem der Ansprüche 1 bis 3, worin in Schritt b) der Wasserstoffdruck von 1,03 bis 4,13 MPa (150 bis 600 psi), die Temperatur von 40 bis 130° C beträgt, und der Hydrierungskatalysator erhalten wurde durch Kontaktieren einer Alkylaluminiumverbindung mit einer Nickel- und/oder Kobalt-Verbindung, vorzugsweise durch Kontaktieren einer Alkylaluminiumverbindung mit einer Nickelverbindung für eine Dauer von 4 bis 120 Minuten.

5. Verfahren nach einem der Ansprüche 1 bis 4, worin in Schritt c):
a) der aliphatische Kohlenwasserstoff ausgewählt wird aus Cyclohexan, n-Hexan und Mischungen davon; und/oder
b) das Molverhältnis von Ameisensäure zu den Doppelbindungen des teilweise hydrierten Polymers von 5:1 bis 2:1, insbesondere von 3:1 bis 2:1 beträgt; und/oder
c) das Molverhältnis von Wasserstoffperoxid zu den Doppelbindungen des teilweise hydrierten Polymers von 5:1 bis 2:1, insbesondere von 3:1 bis 2:1 beträgt; und/oder
d) das Molverhältnis von Wasserstoffperoxid zu Ameisensäure etwa 1:1, z. B. von etwa 0,9:1 bis 1,1:1 beträgt; und/oder
e) die Reaktionstemperatur von 60 bis 90° C beträgt; und/oder
f) die Beschickungszeit von Wasserstoffperoxid von 1 bis 60, insbesondere von 5 bis 30 Minuten beträgt; und/oder
g) die Gesamtdauer der Umsetzung von 1 bis 5, insbesondere von 2 bis 4 Stunden beträgt.

6. Lineare oder verzweigte Blockcopolymere, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (I):
[A-(E-B-EPOX)]ₙX (I),
worin:
A einen aromatischen Vinylpolymerblock darstellt, (E-B-EPOX) ein hydrierter Poly(1,3-dien)-Block ist, der Epoxyeinheiten mit 1,4-cis- und/oder 1,4-trans-Struktur enthält, die entlang der Polymerkette verteilt sind, n = eine ganze Zahl von 1 bis 20 bedeutet und X eine Verbindungsgruppe mit der Wertigkeit n ist;
wobei die genannten Copolymere ein durchschnittliches Molekulargewicht von 30.000 bis 400.000 aufweisen, einen Gehalt an aromatischen Vinylpolymerblöcken von 10 bis 50 Gew.-% haben und einen Gehalt an EPOX-Einheiten von 1 - 20 % der ungesättigten Bindungen aufweisen, die anfänglich vor der Teilhydrierung desselben in dem Polymer anwesend waren.

7. Lineare oder verzweigte Blockcopolymere, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (II):
[(E₁-B₁-EPOX₁)-HT-A-(E₂-B₂-EPOX₂)]ₙX (II)
worin:
A einen aromatischen Vinylpolymerblock darstellt, der 10 bis 50 Gew.-% des gesamten Copolymers ausmacht; HT ein Copolymer-Segment mit allmählich verändertem Komponentengehalt darstellt, zusammengesetzt aus aromatischen Vinyl- und Dien-Einheiten, das in Mengen von 0 bis 20 Gew.-% des gesamten Copolymers anwesend ist, wobei die ursprünglichen ungesättigten Bindungen des genannten Copolymer-Segments teilweise hydriert und nachfolgend vollständig epoxidiert wurden;
(E₁-B₁-EPOX₁) und (E₂-B₂-EPOX₂) hydrierte Poly(1,3-dien)-Blöcke darstellen, die Epoxyeinheiten mit 1,4-cis- und/oder 1,4-trans-Struktur enthalten, erhalten durch die Epoxidierung von 1 bis 20 % der ungesättigten Bindungen, die ursprünglich vor der Hydrierung darin anwesend waren, wobei die genannten Copolymerblöcke zusammen 50 bis 90 Gew.-% des gesamten Copolymers ausmachen und das Gewichtsverhältnis der Blöcke (E₁-B₁-EPOX₁) zu den Blöcken (E₂-B₂-EPOX₂) von 0,1:1 bis 1,0:1 beträgt;
n eine ganze Zahl von 1 bis 20 bedeutet und X eine Verbindungsgruppe mit der Wertigkeit n ist;
wobei das durchschnittliche Molekulargewicht der Blockcopolymere der Formel (II) von 30.000 bis 400.000 beträgt.

8. Lineare Blockcopolymere, erhalten durch Blockcopolymerisation von aromatischen Vinyl- und Dien-Monomeren, worin die Polydienblöcke teilweise hydriert und nachfolgend vollständig epoxidiert wurden, dargestellt durch die allgemeine Formel (III):
A₁-(E₁-B₁-EPOX₁)-A₂-HT-(E₂B₂EPOX₂) (III)
worin:
A₁ und A₂ aromatische Vinylpolymerblöcke bedeuten;
HT ein Copolymer-Segment mit allmählich verändertem Komponentengehalt darstellt, zusammengesetzt aus aromatischen Vinyl- und Dien-Einheiten, das von 0 bis 20 Gew.-% des gesamten Copolymers ausmacht, wobei die ursprünglich ungesättigten Bindungen des genannten Copolymer-Segments teilweise hydriert und nachfolgend vollständig epoxidiert wurden; (E₁-B₁-EPOX₁) und (E₂-B₂-EPOX₂) hydrierte Poly(1,3-dien)Blöcke darstellen, die Epoxyeinheiten mit 1,4-cis- und/oder 1,4-trans-Struktur enthalten, erhalten durch die Epoxidierung von 1 bis 20 % der ungesättigten Bindungen, die ursprünglich vor der Hydrierung darin anwesend waren, wobei die genannten Copolymerblöcke zusammen 50 bis 90 Gew.-% des gesamten Copolymers ausmachen und das Gewichtsverhältnis der Blöcke (E₁-B₁-EPOX₁) zu den Blöcken (E₂-B₂-EPOX₂) von 0,1:1 bis 1,0:1 beträgt;
wobei das durchschnittliche Molekulargewicht der Blockcopolymere der Formel (III) von 30.000 bis 400.000 beträgt.

9. Blockcopolymere nach einem der Ansprüche 6 und 7, worin n von 1 bis 4 beträgt.

10. Blockcopolymere nach einem der Ansprüche 6 bis 9, worin der (die) aromatische(n) Vinylpolymer-Block (Blöcke) ein Polystryrolblock (Blöcke) ist/sind und/oder die Poly(1,3-Dien)-Blöcke Polybutadien-Blöcke sind.

11. Verwendung der Blockcopolymere nach einem der Ansprüche 6 bis 10 zur Modifizierung von technischen Polymeren und auf dem Gebiet von Klebstoffen und Dichtungsmitteln.

## Revendications (Revendications pour l'(les) Etat(s) contractant(s) suivant(s): AT, BE, CH, LI, DE, DK, FR, GB, GR, IT, LU, NL, PT, SE)

1. Copolymères séquencés linéaires ou ramifiés obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (I) :
[A-(E-B-Epox)]ₙX (I)
dans laquelle
A représente une séquence de poly(vinyl-aromatique),
(E-B-Epox) représente une séquence de poly(1,3-diène) hydrogénée qui contient des motifs époxy de type 1,4-cis et/ou 1,4-trans, répartis le long de la chaîne polymère,
n représente un nombre entier valant de 1 à 20, et
X représente un chaînon de couplage, de valence n,
ces copolymères présentant une masse molaire moyenne de 30 000 à 400 000, une proportion de séquences de poly(vinyl-aromatique) de 10 à 50 % en poids, et une proportion de motifs époxy représentant de 1 à 20 % du nombre de liaisons insaturées initialement présentes dans le polymère avant son hydrogénation partielle.

2. Copolymères séquencés linéaires ou ramifiés obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (II) :
[(E₁-B₁-Epox₁)-HT-A-(E₂-B₂-Epox₂)]ₙX (II)
dans laquelle
A représente une séquence de poly(vinyl-aromatique) qui constitue de 10 à 50 % du poids total du copolymère,
HT représente un segment copolymère à gradient de composition, qui est composé de motifs de vinyl-aromatique et de motifs de diène et qui constitue de 0 à 20 % du poids total du copolymère, les liaisons insaturées initialement présentes dans ce segment copolymère à gradient de composition ayant été hydrogénées en partie, puis époxydées en totalité,
(E₁-B₁-Epox₁) et (E₂-B₂-Epox₂) représentent des séquences de poly-(1,3-diène) hydrogénées qui contiennent des motifs époxy de type 1,4-cis et/ou 1,4-trans, lesquels proviennent de l'époxydation de 1 à 20 % des liaisons insaturées initialement présentes avant l'hydrogénation, ces séquences constituant ensemble de 50 à 90 % du poids total du copolymère et le rapport pondéral des séquences (E₁-B₁-Epox₁) aux séquences (E₂-B₂-Epox₂) valant de 0,1/1 à 1,0/1,
n représente un nombre entier valant de 1 à 20, et
X représente un chaînon de couplage, de valence n,
la masse molaire moyenne des copolymères séquencés de formule (II) valant de 30 000 à 400 000.

3. Copolymères séquencés linéaires obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (III) :
A₁-(E₁-B₁-Epox₁)-A₂-HT-(E₂-B₂-Epox₂) (III)
dans laquelle
A₁ et A₂ représentent des séquences de poly(vinyl-aromatique), HT représente un segment copolymère à gradient de composition, qui est composé de motifs de vinyl-aromatique et de motifs de diène et qui constitue de 0 à 20 % du poids total du copolymère, les liaisons insaturées initialement présentes dans ce segment copolymère à gradient de composition ayant été hydrogénées en partie, puis époxydées en totalité, et
(E₁-B₁-Epox₁) et (E₂-B₂-Epox₂) représentent des séquences de poly-(1,3-diène) hydrogénées qui contiennent des motifs époxy de type 1,4-cis et/ou 1,4-trans, lesquels proviennent de l'époxydation de 1 à 20 % des liaisons insaturées initialement présentes avant l'hydrogénation, ces séquences constituant ensemble de 50 à 90 % du poids total du copolymère et le rapport pondéral des séquences (E₁-B₁-Epox₁) aux séquences (E₂-B₂-Epox₂) valant de 0,1/1 à 1,0/1,
la masse molaire moyenne des copolymères séquencés de formule (III) valant de 30 000 à 400 000.

4. Copolymères séquencés conformes à l'une des revendications 1 et 2, dans lesquels n vaut de 1 à 4.

5. Copolymères séquencés conformes à l'une des revendications précédentes, dans lesquels la séquence ou les séquences de poly(vinyl-aromatique) sont une ou des séquences de polystyrène et/ou les séquences de poly(1,3-diène) sont des séquences de polybutadiène.

6. Procédé de préparation de copolymères séquencés conformes à l'une des revendications 1 à 5, qui comporte :
a) la préparation des polymères précurseurs correspondants, non hydrogénés et non époxydés, et
b) l'hydrogénation partielle,
c) puis l'époxydation complète de ces polymères précurseurs, dans lequel procédé :
on réalise l'étape (b) sous une pression d'hydrogène de 0,138 à 6,89 MPa (20 à 1000 psi) et à une température de 30°C à 200°C, en présence d'un catalyseur d'hydrogénation, et
on réalise l'étape (c) en dissolvant le copolymère séquencé partiellement hydrogéné, obtenu dans l'étape (b), dans un hydrocarbure aliphatique, en ajoutant de l'acide formique à la solution ainsi obtenue, en chauffant ce mélange réactionnel à une température de 50°C à 100°C, et en y ajoutant ensuite du peroxyde d'hydrogène, pour obtenir finalement un polymère époxydé.

7. Procédé conforme à la revendication 6, dans lequel, pour l'étape (b), la pression d'hydrogène vaut de 1,03 à 4,13 MPa (de 150 à 600 psi) et la température vaut de 40°C à 130°C, et l'on a préparé le catalyseur d'hydrogénation en mettant un composé de type alkyl-aluminium en contact avec un composé du nickel et/ou du cobalt, et de préférence, en mettant un composé de type alkyl-aluminium en contact avec un composé du nickel pendant 4 à 120 minutes.

8. Procédé conforme à l'une des revendications 6 et 7, dans lequel, pour l'étape (c),
a) l'hydrocarbure aliphatique est choisi parmi du cyclohexane, du n-hexane et leurs mélanges ; et/ou
b) le rapport molaire de l'acide formique aux doubles liaisons du polymère partiellement hydrogéné vaut de 5/1 à 2/1, et en particulier de 3/1 à 2/1 ; et/ou
c) le rapport molaire du peroxyde d'hydrogène aux doubles liaisons du polymère partiellement hydrogéné vaut de 5/1 à 2/1, et en particulier de 3/1 à 2/1 ; et/ou
d) le rapport molaire du peroxyde d'hydrogène à l'acide formique vaut environ 1/1, par exemple de 0,9/1 à 1,1/1; et/ou
e) la température de réaction vaut de 60°C à 90°C ; et/ou
f) l'addition de peroxyde d'hydrogène dure de 1 à 60 minutes, et en particulier de 5 à 30 minutes ; et/ou
g) la réaction dure au total de 1 à 5 heures, et en particulier de 2 à 4 heures.

9. Emploi des copolymères séquencés conformes à l'une des revendications 1 à 5, pour modifier des polymères techniques ou dans le domaine des adhésifs et des produits d'étanchéité.

## Revendications (Revendications pour l'(les) Etat(s) contractant(s) suivant(s): ES)

1. Procédé de préparation de copolymères séquencés linéaires ou ramifiés obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (I) :
[A-(E-B-Epox)]ₙX (I)
dans laquelle
A représente une séquence de poly(vinyl-aromatique),
(E-B-Epox) représente une séquence de poly(1,3-diène) hydrogénée qui contient des motifs époxy de type 1,4-cis et/ou 1,4-trans, répartis le long de la chaîne polymère,
n représente un nombre entier valant de 1 à 20, et
X représente un chaînon de couplage, de valence n,
ces copolymères présentant une masse molaire moyenne de 30 000 à 400 000, une proportion de séquences de poly(vinyl-aromatique) de 10 à 50 % en poids, et une proportion de motifs époxy représentant de 1 à 20 % du nombre de liaisons insaturées initialement présentes dans le polymère avant son hydrogénation partielle,
procédé qui est caractérisé en ce qu'il comporte :
a) la préparation des polymères précurseurs correspondants, non hydrogénés et non époxydés, et
b) l'hydrogénation partielle,
c) puis l'époxydation complète de ces polymères précurseurs, et dans lequel procédé :
on réalise l'étape (b) sous une pression d'hydrogène de 0,138 à 6,89 MPa (20 à 1000 psi) et à une température de 30°C à 200°C, en présence d'un catalyseur d'hydrogénation, et
on réalise l'étape (c) en dissolvant le copolymère séquencé partiellement hydrogéné, obtenu dans l'étape (b), dans un hydrocarbure aliphatique, en ajoutant de l'acide formique à la solution ainsi obtenue, en chauffant ce mélange réactionnel à une température de 50°C à 100°C, et en y ajoutant ensuite du peroxyde d'hydrogène, pour obtenir finalement un polymère époxydé.

2. Procédé de préparation de copolymères séquencés linéaires ou ramifiés obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (II) :
[(E₁-B₁-Epox₁)-HT-A-(E₂-B₂-Epox₂)]ₙX (II)
dans laquelle
A représente une séquence de poly(vinyl-aromatique) qui constitue de 10 à 50 % du poids total du copolymère,
HT représente un segment copolymère à gradient de composition, qui est composé de motifs de vinyl-aromatique et de motifs de diène et qui constitue de 0 à 20 % du poids total du copolymère, les liaisons insaturées initialement présentes dans ce segment copolymère à gradient de composition ayant été hydrogénées en partie, puis époxydées en totalité,
(E₁-B₁-Epox₁) et (E₂-B₂-Epox₂) représentent des séquences de poly-(1,3-diène) hydrogénées qui contiennent des motifs époxy de type 1,4-cis et/ou 1,4-trans, lesquels proviennent de l'époxydation de 1 à 20 % des liaisons insaturées initialement présentes avant l'hydrogénation, ces séquences constituant ensemble de 50 à 90 % du poids total du copolymère et le rapport pondéral des séquences (E₁-B₁-Epox₁) aux séquences (E₂-B₂-Epox₂) valant de 0,1/1 à 1,0/1,
n représente un nombre entier valant de 1 à 20, et
X représente un chaînon de couplage, de valence n,
la masse molaire moyenne des copolymères séquencés de formule (II) valant de 30 000 à 400 000,
procédé qui est caractérisé en ce qu'il comporte :
a) la préparation des polymères précurseurs correspondants, non hydrogénés et non époxydés, et
b) l'hydrogénation partielle,
c) puis l'époxydation complète de ces polymères précurseurs, et dans lequel procédé :
on réalise l'étape (b) sous une pression d'hydrogène de 0,138 à 6,89 MPa (20 à 1000 psi) et à une température de 30°C à 200°C, en présence d'un catalyseur d'hydrogénation, et
on réalise l'étape (c) en dissolvant le copolymère séquencé partiellement hydrogéné, obtenu dans l'étape (b), dans un hydrocarbure aliphatique, en ajoutant de l'acide formique à la solution ainsi obtenue, en chauffant ce mélange réactionnel à une température de 50°C à 100°C, et en y ajoutant ensuite du peroxyde d'hydrogène, pour obtenir finalement un polymère époxydé.

3. Procédé de préparation de copolymères séquencés linéaires obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (III) :
A₁-(E₁-B₁-Epox₁)-A₂-HT-(E₂-B₂-Epox₂) (III)
dans laquelle
A₁ et A₂ représentent des séquences de poly(vinyl-aromatique), HT représente un segment copolymère à gradient de composition, qui est composé de motifs de vinyl-aromatique et de motifs de diène et qui constitue de 0 à 20 % du poids total du copolymère, les liaisons insaturées initialement présentes dans ce segment copolymère à gradient de composition ayant été hydrogénées en partie, puis époxydées en totalité, et
(E₁-B₁-Epox₁) et (E₂-B₂-Epox₂) représentent des séquences de poly-(1,3-diène) hydrogénées qui contiennent des motifs époxy de type 1,4-cis et/ou 1,4-trans, lesquels proviennent de l'époxydation de 1 à 20 % des liaisons insaturées initialement présentes avant l'hydrogénation, ces séquences constituant ensemble de 50 à 90 % du poids total du copolymère et le rapport pondéral des séquences (E₁-B₁-Epox₁) aux séquences (E₂-B₂-Epox₂) valant de 0,1/1 à 1,0/1,
la masse molaire moyenne des copolymères séquencés de formule (III) valant de 30 000 à 400 000,
procédé qui est caractérisé en ce qu'il comporte :
a) la préparation des polymères précurseurs correspondants, non hydrogénés et non époxydés, et
b) l'hydrogénation partielle,
c) puis l'époxydation complète de ces polymères précurseurs,
et dans lequel procédé :
on réalise l'étape (b) sous une pression d'hydrogène de 0,138 à 6,89 MPa (20 à 1000 psi) et à une température de 30°C à 200°C, en présence d'un catalyseur d'hydrogénation, et
on réalise l'étape (c) en dissolvant le copolymère séquencé partiellement hydrogéné, obtenu dans l'étape (b), dans un hydrocarbure aliphatique, en ajoutant de l'acide formique à la solution ainsi obtenue, en chauffant ce mélange réactionnel à une température de 50°C à 100°C, et en y ajoutant ensuite du peroxyde d'hydrogène, pour obtenir finalement un polymère époxydé.

4. Procédé conforme à l'une des revendications 1 à 3, dans lequel, pour l'étape (b), la pression d'hydrogène vaut de 1,03 à 4,13 MPa (de 150 à 600 psi) et la température vaut de 40°C à 130°C, et l'on a préparé le catalyseur d'hydrogénation en mettant un composé de type alkyl-aluminium en contact avec un composé du nickel et/ou du cobalt, et de préférence, en mettant un composé de type alkyl-aluminium en contact avec un composé du nickel pendant 4 à 120 minutes.

5. Procédé conforme à l'une des revendications 1 à 4, dans lequel, pour l'étape (c),
a) l'hydrocarbure aliphatique est choisi parmi du cyclohexane, du n-hexane et leurs mélanges ; et/ou
b) le rapport molaire de l'acide formique aux doubles liaisons du polymère partiellement hydrogéné vaut de 5/1 à 2/1, et en particulier de 3/1 à 2/1 ; et/ou
c) le rapport molaire du peroxyde d'hydrogène aux doubles liaisons du polymère partiellement hydrogéné vaut de 5/1 à 2/1, et en particulier de 3/1 à 2/1 ; et/ou
d) le rapport molaire du peroxyde d'hydrogène à l'acide formique vaut environ 1/1, par exemple de 0,9/1 à 1,1/1 ; et/ou
e) la température de réaction vaut de 60°C à 90°C ; et/ou
f) l'addition de peroxyde d'hydrogène dure de 1 à 60 minutes, et en particulier de 5 à 30 minutes ; et/ou
g) la réaction dure au total de 1 à 5 heures, et en particulier de 2 à 4 heures.

6. Copolymères séquencés linéaires ou ramifiés obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (I) :
[A-(E-B-Epox)]ₙX (I)
dans laquelle
A représente une séquence de poly(vinyl-aromatique),
(E-B-Epox) représente une séquence de poly(1,3-diène) hydrogénée qui contient des motifs époxy de type 1,4-cis et/ou 1,4-trans, répartis le long de la chaîne polymère,
n représente un nombre entier valant de 1 à 20, et
X représente un chaînon de couplage, de valence n,
ces copolymères présentant une masse molaire moyenne de 30 000 à 400 000, une proportion de séquences de poly(vinyl-aromatique) de 10 à 50 % en poids, et une proportion de motifs époxy représentant de 1 à 20 % du nombre de liaisons insaturées initialement présentes dans le polymère avant son hydrogénation partielle.

7. Copolymères séquencés linéaires ou ramifiés obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (II)
[(E₁-B₁-Epox₁)-HT-A-(E₂-B₂-Epox₂)]ₙX (II)
dans laquelle
A représente une séquence de poly(vinyl-aromatique) qui constitue de 10 à 50 % du poids total du copolymère,
HT représente un segment copolymère à gradient de composition, qui est composé de motifs de vinyl-aromatique et de motifs de diène et qui constitue de 0 à 20 % du poids total du copolymère, les liaisons insaturées initialement présentes dans ce segment copolymère à gradient de composition ayant été hydrogénées en partie, puis époxydées en totalité,
(E₁-B₁-Epox₁) et (E₂-B₂-Epox₂) représentent des séquences de poly-(1,3-diène) hydrogénées qui contiennent des motifs époxy de type 1,4-cis et/ou 1,4-trans, lesquels proviennent de l'époxydation de 1 à 20 % des liaisons insaturées initialement présentes avant l'hydrogénation, ces séquences constituant ensemble de 50 à 90 % du poids total du copolymère et le rapport pondéral des séquences (E₁-B₁-Epox₁) aux séquences (E₂-B₂-Epox₂) valant de 0,1/1 à 1,0/1,
n représente un nombre entier valant de 1 à 20, et
X représente un chaînon de couplage, de valence n,
la masse molaire moyenne des copolymères séquencés de formule (II) valant de 30 000 à 400 000.

8. Copolymères séquencés linéaires obtenus par copolymérisation en séquences de monomères vinyl-aromatiques et de monomères diéniques, dans lesquels les séquences de polydiène ont été partiellement hydrogénées, puis complètement époxydées, et qui sont représentés par la formule générale (III):
A₁-(E₁-B₁-Epox₁)-A₂-HT-(E₂-B₂-Epox₂) (III)
dans laquelle
A₁ et A₂ représentent des séquences de poly(vinyl-aromatique), HT représente un segment copolymère à gradient de composition, qui est composé de motifs de vinyl-aromatique et de motifs de diène et qui constitue de 0 à 20 % du poids total du copolymère, les liaisons insaturées initialement présentes dans ce segment copolymère à gradient de composition ayant été hydrogénées en partie, puis époxydées en totalité, et
(E₁-B₁-Epox₁) et (E₂-B₂-Epox₂) représentent des séquences de poly-(1,3-diène) hydrogénées qui contiennent des motifs époxy de type 1,4-cis et/ou 1,4-trans, lesquels proviennent de l'époxydation de 1 à 20 % des liaisons insaturées initialement présentes avant l'hydrogénation, ces séquences constituant ensemble de 50 à 90 % du poids total du copolymère et le rapport pondéral des séquences (E₁-B₁-Epox₁) aux séquences (E₂-B₂-Epox₂) valant de 0,1/1 à 1,0/1,
la masse molaire moyenne des copolymères séquencés de formule (III) valant de 30 000 à 400 000.

9. Copolymères séquencés conformes à l'une des revendications 1 et 2, dans lesquels n vaut de 1 à 4.

10. Copolymères séquencés conformes à l'une des revendications précédentes, dans lesquels la séquence ou les séquences de poly(vinyl-aromatique) sont une ou des séquences de polystyrène et/ou les séquences de poly(1,3-diène) sont des séquences de polybutadiène.

11. Emploi des copolymères séquencés conformes à l'une des revendications 1 à 5, pour modifier des polymères techniques ou dans le domaine des adhésifs et des produits d'étanchéité.
